# EUROPEAN PATENT APPLICATION

(11) **EP 3 026 659 A1**
(43) Date of publication of application: **01.06.2016**
(21) Application number: 15190907.4
(22) Date of filing: 21.10.2015
(51) Int. Cl.: G09G 3/00, G06F 1/16, G06F 3/01

(54) **IMAGE REPRODUCING DEVICE AND METHOD**

(30) Priority: 25.11.2014 KR 20140165498
(71) Applicant: Samsung Electronics Co., Ltd., Gyeonggi-do 16677 (KR)
(72) Inventor: CHOI, Hyun-seok, Gyeonggi-do (KR); KOO, Ki-hyeok, Gyeonggi-do (KR); HAHM, Cheul-hee, Gyeonggi-do (KR)
(74) Representative: Taor, Simon Edward William

(57) **Abstract**

A method of reproducing an image, performed by a device for reproducing an image is provided, the device being capable of changing a curvature of a panel of a display, the method including obtaining the curvature of the panel of the display and applying a sound setting based on the obtained curvature of the panel of the display.

## Description

The present disclosure relates to an image reproducing device and method.

Recently, image reproducing devices such as digital televisions (TVs) have allowed users to better immerse themselves in the experience of viewing images on curved display panels of displays. Some products have evolved from a stage where the display panel is curved to a stage where a curvature of a display panel of a display variably changes.

In image reproducing devices, sound effects are an important factor in improving immersion of users when viewing images. However, for image reproducing devices, technical advances with respect to auditory aspects are unsatisfactory when compared to technical advances with respect to visual aspects.

More specifically, research is needed for an image reproducing device and method which applies variable sound effect settings according to a change in a curvature of a display panel for an image reproducing device having a display panel with variable curvature.

Additional aspects will be set forth in the description which follows and, will be apparent from the description of the example embodiments.

According to an aspect of an example embodiment, a method of reproducing an image, performed by a device for reproducing an image, the device being capable of changing a curvature of a panel of a display, includes obtaining the curvature of the panel of the display and applying a sound setting based on the obtained curvature of the panel of the display.

The method may further include sensing or determining a distance between the display and a user, in which applying the sound setting includes applying the sound setting based on the sensed or determined distance between the display and the user and the obtained curvature of the panel of the display.

The method may further include sensing or determining a position of a user, in which applying the sound setting includes applying the sound setting based on the sensed or determined position of the user and the obtained curvature of the panel of the display.

The method may further include sensing or determining a change in the curvature of the panel of the display and applying the sound setting based on the sensed or determined change in the curvature of the panel of the display.

The sound setting may include at least one of settings for applying a stereosonic effect, a degree of the stereosonic effect, an output power, and an output direction.

The method may further include displaying the sound setting on the display.

The method may further include receiving an input (e.g., a user input) with respect to the sound setting displayed on the display and changing the sound setting based on the received input.

According to another aspect of an example embodiment, a device for reproducing an image includes a display configured to display the image on a panel of a display, the panel of the display having a changeable curvature and a controller configured to obtain or determine the curvature of the panel of the display and to apply a sound setting based on the obtained or determined curvature.

The device may further include a sensor configured to sense or determine a distance between the display and a user, in which the controller is configured to apply the sound setting based on the sensed or determined distance between the display and the user and the obtained or determined curvature.

The device may further include a sensor configured to sense or determine a position of a user, in which the controller is configured to apply the sound setting based on the sensed or determined position of the user and the obtained or determined curvature.

The device may further include a curvature controller configured to sense or determine a change in the curvature of the panel of the display and to apply a predetermined sound setting based on the sensed or determined change in the curvature of the panel of the display.

The sound setting may include at least one of settings for applying a stereosonic effect, a degree of the stereosonic effect, an output power, and an output direction.

The display may display the sound setting.

The device may further include input circuitry configured to receive an input with respect to the sound setting displayed on the display, in which the controller is configured to change the sound setting based on the received input.

According to another aspect of an example embodiment, a non-transitory computer-readable recording medium has recorded thereon a program for implementing the method of reproducing an image, when executed by a computer.

These and/or other aspects and advantages of the example embodiments will become apparent and more readily appreciated from the following detailed description of the example embodiments, taken in conjunction with the accompanying drawings in which like reference numerals refer to like elements, and wherein:
FIGS. 1A, 1B, and 1C illustrate examples of desirable sound effects for respective curvatures;
FIG. 2 is a block diagram illustrating an image reproducing device;
FIG. 3 is a block diagram of an image reproducing device;
FIG. 4 is a flowchart illustrating an image reproducing method;
FIG. 5 is a flowchart illustrating an image reproducing method;
FIG. 6 is a block diagram illustrating an image reproducing device;
FIG. 7 is a flowchart illustrating an image reproducing method;
FIG. 8 is a flowchart illustrating an image reproducing method;
FIGS. 9A and 9B illustrate examples in which a curvature setting value and a sound effect setting value are displayed on a display;
FIG. 10 is a block diagram illustrating an image reproducing device;
FIG. 11 illustrates an example in which a stereosonic sound effect is set; and
FIG. 12 is a flowchart illustrating an example of setting sound effects with respect to a curvature value.

Reference will now be made in detail to example embodiments, illustrated in the accompanying drawings, wherein like reference numerals refer to like elements throughout. In this regard, the example embodiments may have different forms and should not be construed as being limited to the descriptions set forth herein. Accordingly, the example embodiments are merely illustrative and described below, by referring to the figures, to explain aspects of the disclosure. Expressions such as "at least one of," when preceding a list of elements, modify the entire list of elements and do not modify the individual elements of the list.

Advantages and characteristics of the disclosure and a method of achieving the advantages and characteristics will become more clear with reference to example embodiments described below together with the accompanying drawings. However, the disclosure is not limited to the following example embodiments and may be implemented in various forms, and the provided example embodiments are merely provided to let those of ordinary skill in the art know the category of the disclosure and the disclosure is defined by the scope of the claims.

Terms used herein will be described in brief and then the present disclosure will be described in detail.

The terms used in the disclosure have been selected from currently widely used general terms in consideration of the functions in the disclosure. However, the terms may vary according to the intention of one of ordinary skill in the art, and the advent of new technologies. Also, for special cases, meanings of the terms selected by the applicant are described in detail in the description section. Accordingly, the terms used in the disclosure are defined based on their meanings in relation to the contents discussed throughout the specification, not necessarily by their simple meanings.

Throughout the entirety of the specification of the disclosure, if it is assumed that a certain part includes a certain component, the term 'including' means that a corresponding component may further include other components unless specified otherwise. In example embodiments, the term "unit", as used herein, denotes, but embodiments of the invention are not limited to, a software or hardware component, such as, for example, electronic circuitry, a Field Programmable Gate Array (FPGA) or Application Specific Integrated Circuit (ASIC), which performs certain tasks. A unit may be configured to reside on the addressable storage medium and configured to execute on one or more processors. Thus, a unit may include, by way of example, components, such as software components, object-oriented software components, class components and task components, processes, functions, attributes, procedures, subroutines, segments of program code, drivers, firmware, microcode, circuitry, data, databases, data structures, tables, arrays, and variables. The functionality provided for in the components may be combined into fewer components or further separated into additional components.

Hereinafter, example embodiments will be described with reference to the drawings. Portions that are not related to the description of the example embodiments may be omitted herein so as not to obscure the description.

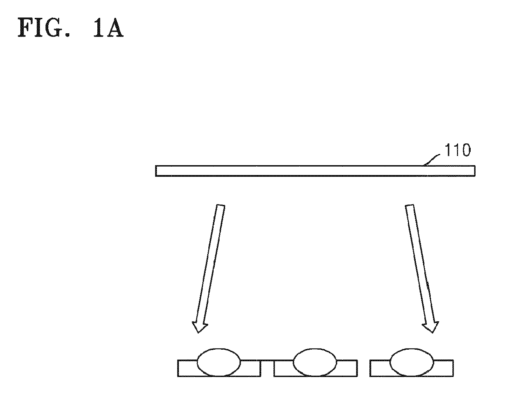

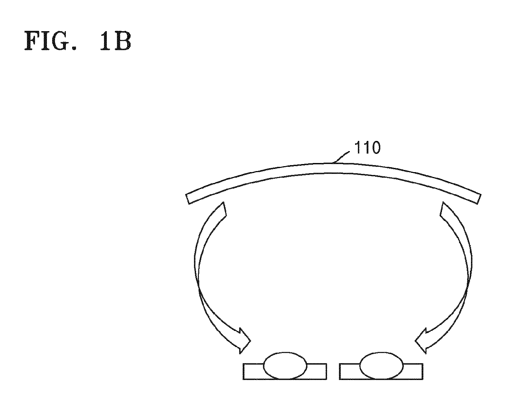

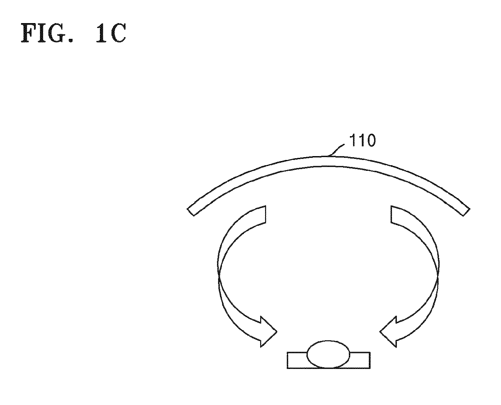

FIGS. 1A, 1B, and 1C illustrate examples of desirable sound effects for respective curvatures according to example embodiments.

A curvature may mean a degree of bending of a display panel of an image reproducing device.

There may be several curvatures indicating degrees of bending, for example, a degree whereby a display panel of a display 110 is not bent at all (e.g., flat) as illustrated in FIG. 1A, a degree whereby the display panel is bent a little as illustrated in FIG. 1B, and a degree whereby the display panel is bent a lot as illustrated in FIG. 1C, and the more the display panel is bent, the larger the curvature or degree of curvature is.

The curvature may be expressed by a number in a range (for example, from 1 to 10) for each step corresponding to each range or may be expressed as 1000R, 2000R, 3000R, and so forth based on a size of a radius of a virtual circle extended along a curved surface of a curved panel, or may be expressed in other various ways not described herein.

A bendable television (TV) may mean a TV having a screen in which a curvature of a panel variably changes.

If the panel is not bent as in the display 110 illustrated in FIG. 1A, that is, if a curvature is 0, this panel may, for example, be suitable for a case where many people watch TV together. If the panel is bent a little as in the display 110 illustrated in FIG. 1B, the panel may, for example, be suitable for a case where a fewer number of people than those in FIG. 1A watch TV together. If the panel is bent a lot as in the display 110 illustrated in FIG. 1C, the panel may, for example, be suitable for a case where a person watches TV alone.

For each case, an optimal or desired sound setting may vary with a curvature of the display 110.

For example, for FIG. 1A, the optimal or desired setting may, for example, be made to deliver sound as indicated by arrows illustrated in FIG. 1A. For FIG. 1B, the optimal or desired setting may, for example, be made to deliver sound as indicated by arrows illustrated in FIG. 1B. For FIG. 1C the optimal or desired setting may, for example, be made to deliver sound as indicated by arrows illustrated in FIG. 1C.

In some example embodiments, when a viewer watches images on a flat-surface screen, sound effects may be set by default.

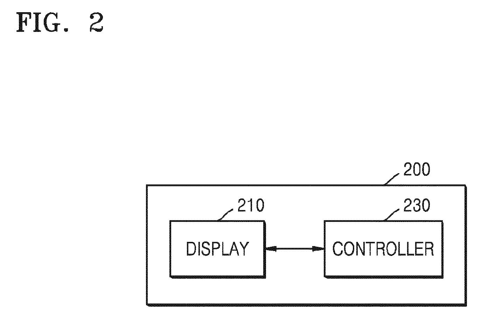

FIG. 2 is a block diagram illustrating an image reproducing device.

An image reproducing device 200 may, for example, be any one of a portable phone, a personal digital assistant (PDA), a laptop computer, a smart TV, and other various multi-function reproducing devices or entertainment devices.

The image reproducing device 200 may include a display 210 and a controller 230.

The display 210 displays an image on a panel having, for example, a changeable curvature when the image reproducing device 200 reproduces the image.

In some example embodiments, the display 210 may include a voice output device.

In some other example embodiments, the display 210 may communicate with an external device such as, for example, a home theater to add and use the external device as a voice output device.

The controller 230 may be configured to obtain or determine a curvature of a display panel and to apply a sound setting based on the obtained curvature of the display panel.

The sound setting may include at least one of whether to apply a stereosonic effect, a degree of the stereosonic effect, an output power, a sound range, and an output direction.

In some example embodiments, the image reproducing device 200 may store sound effect setting information that is determined previously based on a curvature as shown, for example, in Table 1, and automatically apply a sound effect setting corresponding to the curvature if the curvature of the display panel is obtained.

**[Table 1]**

| | Whether to apply stereosonic effect | Degree of stereosonic effect | Output power | Sound range | Output direction |
|---|---|---|---|---|---|
| Curvature 1 | X | 0 | ... | ... | ... |
| Curvature 2 | O | 1 | ... | ... | ... |
| Curvature 3 | O | 2 | ... | ... | ... |

In an example embodiment, the display 210 and the controller 230 are illustrated as separate components, but in some example embodiments, the display 210 and the controller 230 may be integrated and implemented as the same component.

Although the display 210 and the controller 230 are illustrated as components arranged adjacent to each other inside the image reproducing device 200, components performing functions of the display 210 and the controller 230 are not necessarily arranged adjacent to each other physically, and thus the display 210 and the controller 230 may be distributed depending on an example embodiment.

The image reproducing device 200 of embodiments of the invention is not limited to a physical device, and some functions of the image reproducing device 200 may be implemented using software rather than hardware.

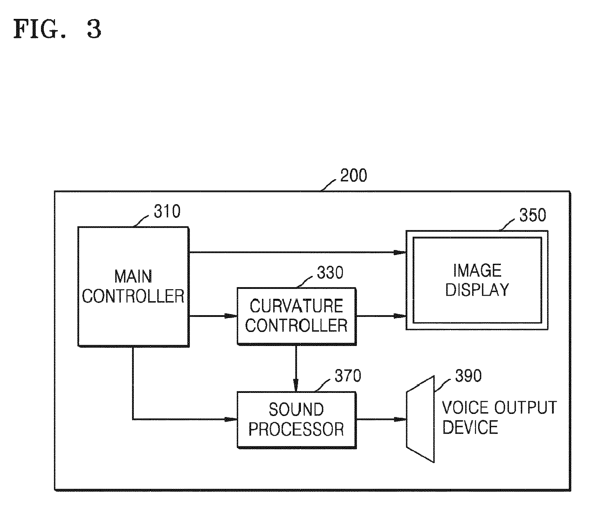

FIG. 3 is a block diagram illustrating an image reproducing device.

The image reproducing device 200 may, for example, include a main controller 310, a curvature controller 330, an image display 350, a sound processor 370, and a voice output device 390.

The main controller 310 is configured to determine an optimal curvature for the display 350, by, for example, taking into account the number of users, a position of a user, a distance between the image reproducing device 200 and the user, and so on.

The curvature controller 330 is configured to apply the curvature determined by the main controller 310 to the image display 350. The curvature controller 330 may be configured to include a function of delivering the curvature information to the sound processor 350 which may be configured to change a sound effect based on the curvature of a panel of the display 350 and a function of sensing a change in the curvature of the panel of the display 350.

The image display 350 displays an image on the panel that is bent corresponding to the curvature. The image display 350 may include a screen of a portable phone, a PDA, a laptop computer, a smart TV, or other multi-function reproducing devices or entertainment devices.

The sound processor 370 applies a sound setting based on the obtained curvature of the panel of the image display 350. The sound setting may include at least one of whether to apply a stereosonic effect, a degree of the stereosonic effect, an output power, a sound range, and an output direction.

The voice output device 390 may include a speaker device of a desk top, a portable phone, a PDA, a smart TV, or the like to convert a code used in a computer or the like into voice and output the voice.

While the main controller 310, the curvature controller 330, and the voice processor 370 are illustrated as separate components in the current example embodiment, the main controller 310, the curvature controller 330, and the voice processor 370 may be integrated and implemented as the same component in some example embodiments.

Although the main controller 310, the curvature controller 330, the image display 350, the voice processor 370, and the voice output device 390 are illustrated as components arranged adjacent to each other inside the image reproducing device 200 in the current example embodiment, components performing functions of the main controller 310, the curvature controller 330, the image display 350, the voice processor 370, and the voice output device 390 are not necessarily arranged adjacent to each other physically, and thus the main controller 310, the curvature controller 330, the image display 350, the voice processor 370, and the voice output device 390 may be distributed depending on an example embodiment.

The image reproducing device 200 of embodiments of the invention is not limited to a physical device, and thus some of the functions of the image reproducing device 200 may be implemented using software rather than hardware.

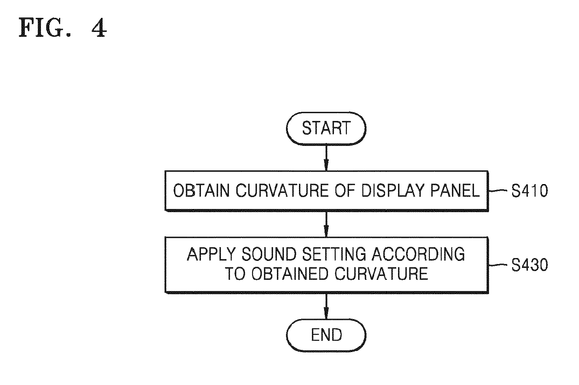

FIG. 4 is a flowchart illustrating an image reproducing method.

In operation S410, the image reproducing device 200 obtains a curvature of a panel of a display.

The curvature of the panel of the display may be a value automatically determined by the image reproducing device 200 or may be a value determined based on a received input, such as, for example, an input received from a user to implement a particular curvature.

When the image reproducing device 200 automatically determines the curvature of the panel of the display, the image reproducing device 200 may, for example, consider at least one of the number of users, a position of a user, a size of the panel, and a default setting value.

In operation S430, the image reproducing device 200 sets a sound setting based on the obtained curvature.

The sound setting may include at least one of whether to apply a stereosonic effect, a degree of the stereosonic effect, an output power, a sound range, and an output direction.

In some example embodiments, the image reproducing device 200 may automatically set a sound effect by further considering, for example, at least one of the size of the panel of the display panel, a distance between the display and a user, and a position of the user in addition to the curvature of the panel of the display.

In some example embodiments, the image reproducing device 200 may receive an input, e.g., a user input, and manually set a sound effect.

In example embodiments, the image reproducing device 200 may display an automatically set sound effect, receive an input with respect to the displayed sound effect, and manually change the sound effect.

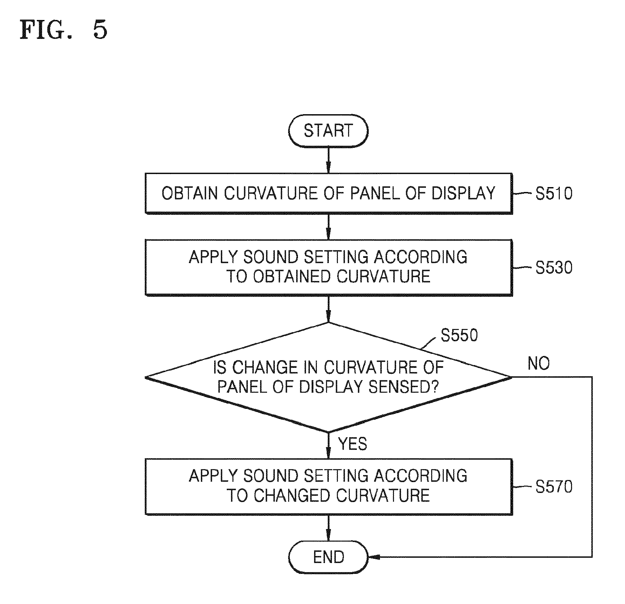

FIG. 5 is a flowchart illustrating an image reproducing method.

In operation S510, the image reproducing device 200 obtains the curvature of the panel of the display.

The curvature of the panel of the display may be a value automatically determined by the image reproducing device 200 or may be a value determined based on a received input.

When the image reproducing device 200 automatically determines the curvature of the panel of the display, the image reproducing device 200 may, for example, consider at least one of the number of users, a position of a user, a size of the panel, and a default setting value.

In operation S530, the image reproducing device 200 applies a sound setting based on the obtained curvature.

The sound setting may, for example, include at least one of whether to apply a stereosonic effect, a degree of the stereosonic effect, an output power, a sound range, and an output direction.

In example embodiments, the image reproducing device 200 may automatically set a sound effect by further considering, for example, at least one of the size of the panel of the display panel, a distance between the display and a user, and a position of the user in addition to the curvature of the panel of the display.

In example embodiments, the image reproducing device 200 may receive an input, e.g., a user input, and manually set a sound effect.

In example embodiments, the image reproducing device 200 may display an automatically set sound effect, receive an input with respect to the displayed sound effect, and manually change the sound effect.

In operation S550, the image reproducing device 200 determines whether a change in the curvature of the panel of the display is sensed.

The curvature of the panel of the display may change during watching of a viewer based on, for example, a change in a watching environment. Thus, the image reproducing device 200 may further include a function of sensing a change in the curvature of the panel of the display.

If the change in the curvature of the panel of the display is sensed, the image reproducing device 200 applies a sound setting based on the changed curvature in operation S570.

The operation of applying the sound setting by the image reproducing device 200 based on the changed curvature is based on the same principle as operation S530 of applying the sound setting based on the obtained curvature.

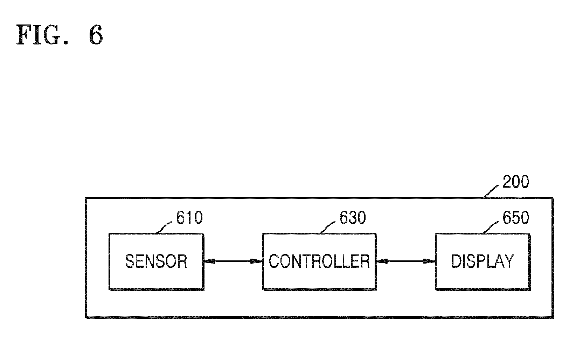

FIG. 6 is a block diagram illustrating an image reproducing device.

The image reproducing device 200 may further include a sensor 610 in addition to a controller 630 and a display 650.

The sensor 610 may, for example, be configured to sense a distance between the display 650 and a user, the number of users, and a position of the user(s).

The controller 630 is configured to receive user information including the distance between the display 650 and the user, the number of users, and the position of the user(s) from the sensor 610 to determine an optimal or desired curvature for the panel of the display 650, and applies a sound setting based on the determined optimal or desired curvature for the panel of the display 650.

The sensor 610 may include a motion sensor for sensing a user's motion, a sound sensor for sensing a user's voice, a photo sensor for sensing light, an inertial sensor such as, for example, a gyroscope, an accelerometer, a microphone, or the like, a pressure sensor, a position sensor, or the like.

While the sensor 610, the controller 630, and the display 650 are illustrated as separate components in the example embodiment, the sensor 610, the controller 630, and the display 650 may be integrated and implemented as the same component in example embodiments.

Although the sensor 610, the controller 630, and the display 650 are illustrated as components arranged adjacent to each other inside the image reproducing device 200 in the example embodiment, components performing functions of the sensor 610, the controller 630, and the display 650 are not necessarily arranged adjacent to each other physically, and thus the sensor 610, the controller 630, and the display 650 may be distributed depending on an example embodiment.

The image reproducing device 200 of embodiments of the invention is not limited to a physical device, and thus some of the functions of the image reproducing device 200 may be implemented using software rather than hardware.

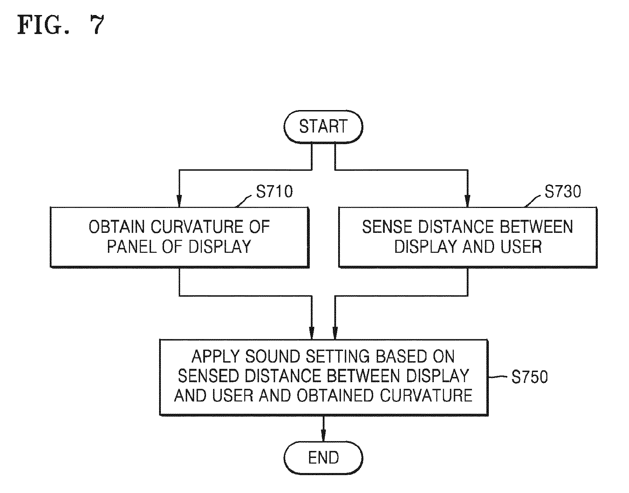

FIG. 7 is a flowchart illustrating an image reproducing method.

In operation S710, the image reproducing device 200 obtains a curvature of a panel of a display.

The curvature of the panel of the display may be a value automatically determined by the image reproducing device 200 or may be a value determined based on a received input, such as, for example, a user input.

When the image reproducing device 200 automatically determines the curvature of the panel of the display, the image reproducing device 200 may consider, for example, at least one of the number of users, a position of a user, a size of the panel, and a default setting value.

In operation S730, the image reproducing device 200 senses or determines the distance between the display and the user.

The image reproducing device 200 may, for example, use various sensors, such as a motion sensor, a sound sensor, a photo sensor, an inertial sensor, a pressure sensor, a position sensor, and so forth, to sense the distance between the display and the user. To sense the distance between the display and the user, the image reproducing device 200 may also use other ways in addition to or in place of the use of a sensor.

In operation S750, the image reproducing device 200 applies a sound setting based on the sensed distance between the display and the user and the obtained curvature.

The image reproducing device 200 may apply a sound setting by using the sensed distance between the display and the user and the obtained curvature at a ratio. The ratio between the sensed distance and the obtained curvature may change depending on a circumstance.

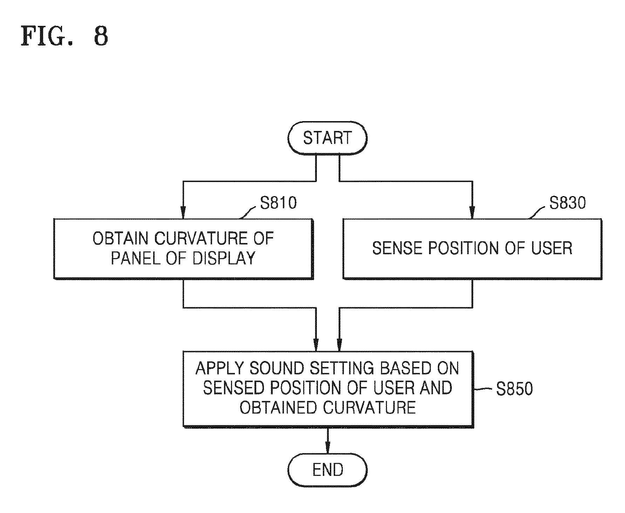

FIG. 8 is a flowchart illustrating an image reproducing method.

In operation S810, the image reproducing device 200 obtains a curvature of a panel of a display.

In operation S830, the image reproducing device 200 senses or determines a position of a user.

The image reproducing device 200 may, for example, use various sensors, such as a motion sensor, a sound sensor, a photo sensor, an inertial sensor, a pressure sensor, a position sensor, and so forth, to sense the position of the user. To sense the position of the user, the image reproducing device 200 may also use other ways in addition to or in place of the use of a sensor.

In operation S850, the image reproducing device 200 applies a sound setting based on the sensed user's position and the obtained curvature.

The image reproducing device 200 may apply a sound setting by using the sensed user's position and the obtained curvature at a ratio. The ratio between the sensed user's position and the obtained curvature may change depending on a circumstance.

The sound setting is applied based on the user's position and the curvature of the panel in the example embodiment, but the sound setting may be applied based, for example, on at least one of the user's position, the curvature of the panel, and the size of the panel in example embodiments.

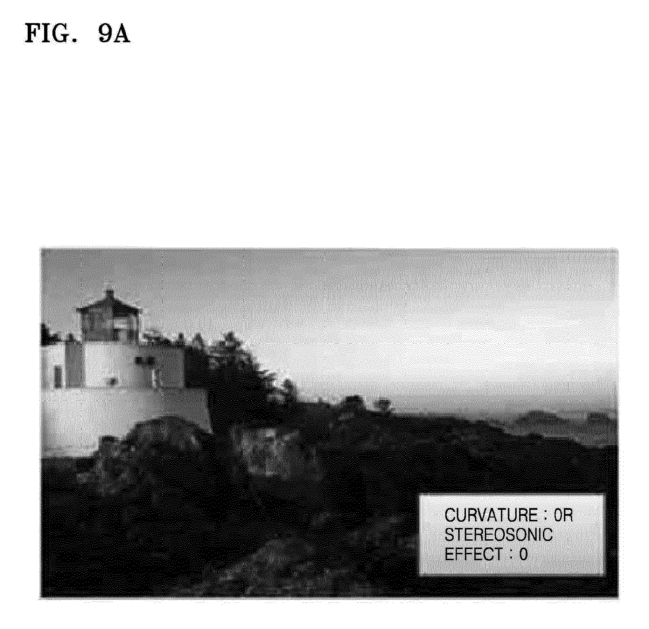

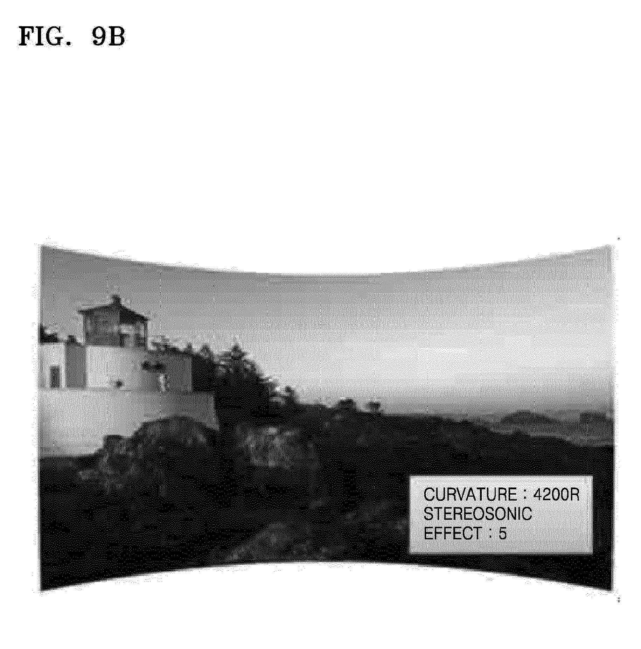

FIGS. 9A and 9B illustrate examples in which a curvature setting value and a sound effect setting value are displayed on a display.

To feed a change in a sound effect based on a curvature back to a user, the image reproducing device 200 may display a curvature and a sound effect degree through a User Interface (UI) as shown, for example, in FIGS. 9A and 9B.

FIG. 9A shows a display of a bendable TV in which a curvature of a panel of the display is oR (e.g., flat), and FIG. 9B shows a display of a bendable TV in which a curvature of a panel of the display is 4200R. The curvature of oR may mean that the panel is not bent at all, that is, is flat, and the curvature of 4200R may mean that the panel is bent to a degree to which a circle having a radius of 4200mm is bent.

The image reproducing device 200 may also display a stereosonic effect. The image reproducing device 200 displays a stereosonic effect of o in FIG. 9A and displays a stereosonic effect of 5 in FIG. 9B. The stereosonic effect of o may, for example, mean that a 3D stereosonic effect is not applied, and the stereosonic effect of 5 may, for example, mean that the 3D stereosonic effect is applied to a stereosonic effect degree of 5 which may mean that a stereoscopic effect is set to a fifth step among steps of a stereosonic effect degree classified based on a criterion.

For example, the stereosonic effect may, for example, mean an effect in which an image having two or more separated sounds recorded therein is reproduced through two or more speakers for a more realistic sound. The stereosonic sound may be implemented using various techniques by using various algorithms such as, for example, Dolby, SRS, DNSe, and so on.

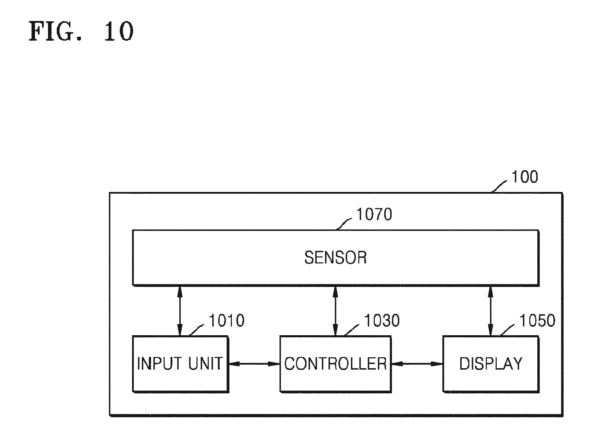

FIG. 10 is a block diagram illustrating an image reproducing device.

The image reproducing device 200 may further include input circuitry in the form of an input unit 1010 in addition to a controller 1030, a display 1050, and a sensor 1070.

As shown in the example embodiment illustrated in FIG. 9A and FIG. 9B, the image reproducing device 200 displays a curvature of the panel and a sound effect on the display 1050 and receives an input with respect to the sound effect through the input unit 1010.

The controller 1030 is configured to set the sound effect received through the input unit 1010.

In this case, the input with respect to the sound effect may be a stereosonic effect degree as in the example embodiment of FIG. 9A and FIG. 9B, a sound output direction, or other various sound effects such as a sound range, a sound volume, and so forth.

Receiving the input with respect to the sound effect may include receiving a number, receiving a selection of at least one of displayed examples, and other various inputs.

While the input unit 1010, the controller 1030, the display 1050, and the sensor 1070 are illustrated as separate components in the example embodiment, the input unit 1010, the controller 1030, the display 1050, and the sensor 1070 may be integrated and implemented as the same component in example embodiments.

Although the input unit 1010, the controller 1030, the display 1050, and the sensor 1070 are illustrated as components disposed adjacent to each other inside the image reproducing device 200 in the example embodiment, components performing functions of the input unit 1010, the controller 1030, the display 1050, and the sensor 1070 are not necessarily arranged adjacent to each other physically, and thus the input unit 1010, the controller 1030, the display 1050, and the sensor 1070 may be distributed depending on an example embodiment.

The image reproducing device 200 of embodiments of the invention is not limited to a physical device, and thus some of the functions of the image reproducing device 200 may be implemented using software rather than hardware.

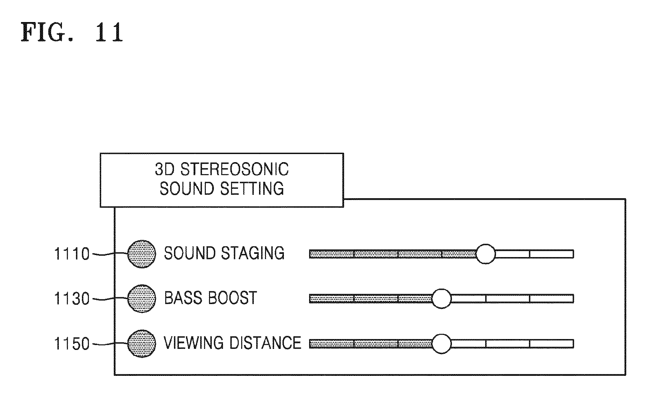

FIG. 11 illustrates an example in which a stereosonic sound effect is set.

In an example embodiment of FIG. 11, a stereosonic effect setting includes settings for sound staging 1110, bass boost 1130, and a viewing distance 1150, but the stereosonic effect setting may also include various other sound effect settings such as, for example, a position impression, a depth impression, and so forth as well as the sound staging 1110, the bass boost 1130, and the viewing distance 1150.

For example, if the curvature of the panel of the display is largest, the image reproducing device 200 may set the sound staging to the largest value. On the other hand, if the curvature of the panel of the display is smallest, the image reproducing device 200 may set the sound staging to the smallest value.

The image reproducing device 200 may receive an input with respect to the sound staging, the bass boost, and the viewing distance.

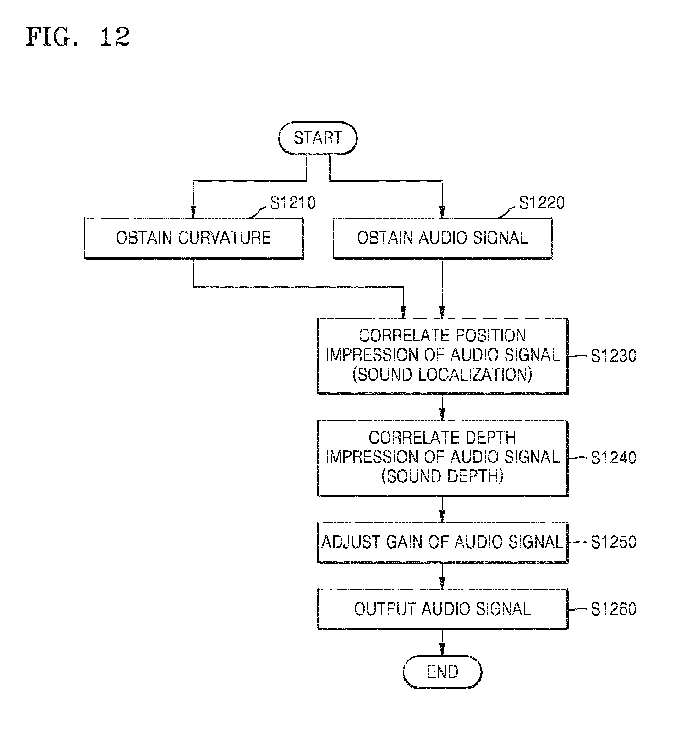

FIG. 12 is a flowchart illustrating an example of setting sound effects with respect to a curvature value.

In operation S1210, the image reproducing device 200 obtains a curvature of a panel of a display.

The curvature of the panel of the display may be a value automatically determined by the image reproducing device 200 or may be a value determined based on a received input.

When the image reproducing device 200 automatically determines the curvature of the panel of the display, the image reproducing device 200 may consider, for example, at least one of the number of users, a position of a user, a size of the panel, and a default setting value.

In operation S1220, the image reproducing device 200 obtains an audio signal.

Generally, an image file stores an audio signal together with a video signal, such that the image reproducing device 200 may obtain the audio signal from the image file.

The image reproducing device 200 applies a position impression correlation effect (sound localization) to the obtained audio signal by reflecting the curvature of the panel of the display in operation S1230.

The sound location effect may mean a technique for adding spatial information to provide a direction of sound, that is, to allow a viewer absent from a space where a sound source is generated to feel a direction of sound.

For example, in an image of a concert scene where a vocal sings a song in the center of a stage, a drum is played at the left rear side of the vocal, and the piano is played at the right rear side of the vocal, spatial information may be added to allow a user to feel a direction of sound in such a way that the positions of the vocal, the drum, and the piano are different, the vocal sings a song in the center of the stage, the drum is played at the left rear side of the vocal, and the piano is played at the right rear side of the vocal.

The image reproducing device 200 reflects a curvature of the panel of the display when adding the position impression correlation effect to the audio signal, allowing the user to feel the direction of sound in a sophisticated manner.

In operation S1240, the image reproducing device 200 further applies a depth impression correlation effect (sound depth) to the audio signal by reflecting the curvature of the panel into the audio signal to which the position impression correlation effect has been applied.

The depth impression of the audio signal may, for example, mean a technique for adding spatial information to provide a distance of sound, that is, to allow a viewer absent from a space where a sound source is generated to feel a distance impression.

For example, spatial information may be added to sound such that when a user watches a three-dimensional (3D) image, audio also protrudes if a 3D image object protrudes from a screen.

The image reproducing device 200 reflects the curvature of the panel of the display when adding the depth impression correlation effect to the audio signal, allowing the user to the distance impression of sound in a sophisticated manner.

In operation S1250, the image reproducing device 200 performs signal gain adjustment with respect to the audio signal to which the position impression correlation effect and the depth impression correlation effect have been applied.

Gain adjustment may, for example, mean adjusting a volume of the audio signal to be constant. The audio signal may have a different volume value according to a recording situation, and thus for an overall unified impression, a default volume value needs to be adjusted to a proper value.

In operation S1260, the image reproducing device 200 outputs the audio signal.

Although the position impression and depth impression of audio are adjusted by reflecting the curvature of the panel of the display in the example embodiment, at least one of sound staging, a sound range, and a sound volume as well as the position impression and depth impression of audio may, for example, also be adjusted in example embodiments.

As discussed, embodiments of the invention can provide a method of reproducing an image on a device capable of changing a curvature of a panel of a display comprising: obtaining the curvature of the panel of the display; and applying a sound setting based on the obtained curvature of the panel of the display. The image may be reproduced on the device with sound reproduced according to the applied sound setting. The image data may be associated with sound information, that is reproduced along with the image.

Embodiments of the invention can also provide a device for reproducing an image, the device comprising: a display configured to display the image on a panel of the display, the panel of the display having a changeable curvature; and a controller configured to obtain the curvature of the panel of the display and to apply a sound setting based on the obtained curvature. The device may include a sound processor for applying the sound setting, and a sound ouput for outputting the sound with the image according to the applied sound setting.

Meanwhile, the disclosure may be implemented by storing a computer-readable code in a computer-readable recording medium. The computer-readable recording medium may include any type of storage devices having stored data that can be read by a computer system.

The computer-readable code is configured to perform operations of a method of processing an image according to the disclosure when read and executed by a processor from the computer-readable recording medium. The computer-readable code may be implemented by various programming languages. Further, functional programs, codes and code segments for achieving the disclosure may be easily interpreted by programmers skilled in the art which the disclosure pertains to.

Examples of recording media readable by the computer may include a Read-Only Memory (ROM), a Random-Access Memory (RAM), a Compact Disc-Read Only Memory (CD-ROM), magnetic tapes, floppy disks, optical data storage devices, carrier waves (such as data transmission through the Internet).

While example embodiments have been described in detail with reference to the drawings, it will be understood by those of ordinary skill in the art that the disclosure can be implemented in other specific forms without changing the technical spirit or essential features of the disclosure. Therefore, the foregoing example embodiments are exemplary in all aspects and should be understood as being illustrative and not limiting. For example, each element described in a single form may be carried out in a distributed manner, and in the same manner, elements described as being distributed may be carried out in an integrated form.

The scope of the disclosure is defined by the appended claims rather than the foregoing description and the example embodiments described therein, and any change or modified form derived from the meaning, range, and its equivalent concept of the claims should be understood as being included in the scope of the disclosure.

It should be understood that example embodiments described herein should be considered in a descriptive sense only and not for purposes of limitation. Descriptions of features or aspects within each example embodiment should typically be considered as available for other similar features or aspects in other example embodiments.

While one or more example embodiments have been described with reference to the figures, it will be understood by those of ordinary skill in the art that various changes in form and details may be made therein without departing from the scope as defined by the following claims.

## Claims

1. A method of reproducing an image on a device capable of changing a curvature of a panel of a display comprising:
obtaining the curvature of the panel of the display; and
applying a sound setting based on the obtained curvature of the panel of the display.

2. The method of claim 1, further comprising sensing a distance between the display and a user,
wherein applying the sound setting comprises applying the sound setting based on the sensed distance between the display and the user and the obtained curvature of the panel of the display.

3. The method of claim 1 or 2, further comprising sensing a position of a user,
wherein applying the sound setting comprises applying the sound setting based on the sensed position of the user and the obtained curvature of the panel of the display.

4. The method of any one of claims 1 to 3, further comprising:
sensing a change in the curvature of the panel of the display; and
applying the sound setting based on the change in the curvature of the panel of the display.

5. The method of any one of claims 1 to 4, wherein the sound setting comprises at least one of settings for whether to apply a stereosonic effect, a degree of the stereosonic effect, an output power, and an output direction.

6. The method of any one of claims 1 to 5, further comprising displaying the sound setting on the display.

7. The method of claim 6, further comprising receiving an input with respect to the sound setting displayed on the display and changing the sound setting based on the received input.

8. A device for reproducing an image, the device comprising:
a display configured to display the image on a panel of the display, the panel of the display having a changeable curvature; and
a controller configured to obtain the curvature of the panel of the display and to apply a sound setting based on the obtained curvature.

9. The device of claim 8, further comprising a sensor configured to sense a distance between the display and a user,
wherein the controller is configured to apply the sound setting based on the sensed distance between the display and the user and the obtained curvature.

10. The device of claim 8 or 9, further comprising a sensor configured to sense a position of a user,
wherein the controller is configured to apply the sound setting based on the sensed position of the user and the obtained curvature.

11. The device of any one of claims 8 to 10, further comprising a curvature controller configured to sense a change in the curvature of the panel of the display and to apply a predetermined sound setting based on the change in the curvature of the panel of the display.

12. The device of any one of claims 8 to 11, wherein the sound setting comprises at least one of settings for whether to apply a stereosonic effect, a degree of the stereosonic effect, an output power, and an output direction.

13. The device of any one of claims 8 to 12, wherein the display is arranged to display the sound setting.

14. The device of claim 13, further comprising input circuitry configured to receive an input with respect to the sound setting displayed on the display,
wherein the controller is configured to change the sound setting based on the received user input.

15. A non-transitory computer-readable recording medium having recorded thereon a program for implementing the method of reproducing an image according to any one of claims 1 to 7, when executed by a computer.
